# EUROPEAN PATENT APPLICATION

(11) **EP 2 796 760 A1**
(43) Date of publication of application: **29.10.2014**
(21) Application number: 13164907.1
(22) Date of filing: 23.04.2013
(51) Int. Cl.: F16L 53/00, H05B 3/00, H05B 3/02, H02J 3/26

(54) **Direct electrical heating system**

(71) Applicant: Siemens Aktiengesellschaft, 80333 München (DE)
(72) Inventor: Eliassen, Sivert, 7025 Trondheim (NO); Haugan, Espen, 7052 Trondheim (NO)

(57) **Abstract**

A direct electrical heating system for heating a section of a pipeline is provided. A power supply of the direct electrical heating system has a power input for receiving electric power and a power output for supplying AC electric power to the pipeline section. The power supply has a DC link at which DC electric power is provided and an inverter connected to the DC link for converting the DC electric power to a single phase AC electric power for direct electrical heating of the pipeline section. The direct electrical heating system further includes an electric connection from the power output of the power supply to the pipeline section.

## Description

### FIELD OF THE INVENTION

The invention relates to a direct electrical heating system for heating a section of a pipeline and to a method of operating a direct electrical heating system.

There is an increasing interest in offshore hydrocarbon production. Hydrocarbon wells can be located many miles from onshore sites and in water depths reaching down to several thousand meters. Subsea pipelines can be used for transporting hydrocarbons from an offshore well to a production vessel or to an onshore site, or may be used for transporting hydrocarbons between different onshore sites separated by an offshore section.

In deep waters, the water temperature is relatively low, it may for example be between about -1 and +4 °C. When hydrocarbons are produced from a subsea well, they can comprise a fraction of water, and they furthermore will cool significantly upon reaching the seabed. The combination of pressurized hydrocarbon gas with water can lead to the formation of hydrates. At low temperatures, the hydrates solidify. Hydrates can restrict the flow within a pipeline, or may even completely plug the pipeline.

Methods are known in the art which use chemicals for preventing hydrate formation. Another method which is more effective is the increase of the temperature of the pipeline, for example by using direct electrical heating (DEH). Such DEH system is for example known from WO 2004/111519, which uses a subsea single phase cable which is attached to two sides of a steel pipeline. A 50/60 Hz alternating current (AC) is passed through the cable and the pipeline, and the pipeline is heated due to its electrical resistance.

For providing electric power to the pipeline in a DEH system, a three phase transformer is generally used for power transformation. The pipeline section to be heated generally constitutes a single phase load. To achieve a symmetric load on the three phase transformer, a balancing circuit or symmetrisation circuit can be used on the secondary side of the transformer. Such balancing circuit may comprise two capacitances and an inductor connected between the three different phases. An example can be found in the document WO 2010/031626 A1. By a properly configuring these three impedances, the transformer may see a symmetrical three phase load, with the power factor being close to one.

Conventional DEH-systems which use a conventional balancing circuit generally need relatively complex fine tuning of this balancing circuit, which has to be done during commissioning. Also, at the terminals supplying electric power to the single phase load, high short circuit levels are generally obtained. In case of a short circuit, there is the danger that the pipeline may be damaged by burning a hole into the pipeline due to high short circuit currents. Also, the configuration of the transformer may need to be relatively complex in order to change the heating power.

Furthermore, in such systems, the power can generally be supplied to the pipeline section only with the frequency of the power grid. Frequency adjustment is generally not possible. Grid frequency may not be optimal for the pipeline impedance. Also, due to different operating modes, a complex contactor control is generally required.

### SUMMARY

Accordingly, there is a need for an improved direct electrical heating system, which mitigates at least some of the drawbacks mentioned above.

This need is matter by the features of the independent claims. The dependent claims described embodiments of the invention.

According to an embodiment of the invention, a direct electrical heating (DEH) system for heating a section of a pipeline is provided. The DEH-system comprises a power supply with a power input for receiving electric power and a power output for supplying AC (alternating current) electric power to the pipeline section. The power supply comprises a DC (direct current) link at which DC electric power is provided and an inverter connected to the DC link for converting the DC electric power to a single phase AC electric power for direct electrical heating of the pipeline section. The DEH-system further comprises electric connections from the power output of the power supply to the pipeline section. The inverter is a modular multi level converter (MMC) configured to convert the DC electric power to a single phase AC electric power. The MMC comprises at least one converter leg having a first and a second converter arm connected in series between a first and a second terminal of the DC link. An AC output of the MMC is connected between the first and the second converter arms. The AC output of the MMC is electrically coupled to the power output of the power supply. Each converter arm comprises plural converter modules connected in series and configured to produce an AC electric power at the AC output of the converter from the DC electric power supplied on the DC link.

By feeding the modular multi level converter from a DC link, it is possible to archive a symmetric load on a three phase transformer without requiring a symmetrisation unit. Accordingly, no complex fine tuning and adjustment of the components of such symmetrisation circuit is necessary. By using the modular approach, it is possible to obtain a higher voltage output, which can be achieved by increasing the number of converter modules in the system. The required voltage can more easily be adjusted, and an increased length of pipeline may be heated by such system. Also, the DEH-system according to the present invention may enable the adjustment of the frequency of the AC voltage supplied to the pipeline section and may furthermore be used to adjust the heating power without requiring a complex transformer.

In an embodiment, the power supply further comprises a rectifier, such as a three phase rectifier, wherein the rectifier is configured to receive AC electric power via the power input of the power supply and to output easy electric power to the DC link. Such rectifier may be configured in any suitable way to obtain DC electric power on the DC link from the power supplied to the power input of the power supply. The power supply may thus be operated with three phase AC electric power.

In an embodiment, the power supply may further comprise an AC to AC transformer connected between the power input of the power supply and the rectifier. This way, the power input of the power supply may directly be coupled to the power grid. By means of the rectifier and the modular multilevel converter, a symmetric load on the secondary side of the AC transformer can be archived. The power supply can in particular comprise a three phase AC to AC transformer.

In an embodiment, the power supply is configured to receive DC power at its power input, the power input being connected to a DC bus. In such configuration, the DC bus may for example be provided to feed multiple direct electrical heating power supplies in addition, so that only one rectifier at the power input to the DC bus would be required. It may alternatively or additionally feed motor drives, which may include adjustable frequency inverters coupled to the DC bus.

In a preferred embodiment, the DC link is a capacitor-less DC link. In particular, no capacitor may be directly connected between the first and the second DC terminals of the DC link. Capacitors comprised in the converter modules of the MMC are not considered to be directly connected between the first and second DC terminals of the DC link. A capacitor less DC link also means that no capacitor bank, or series connection of capacitors is connected directly between the first and second DC terminals of the DC link. Such configuration can reduce the risk of component damage in the event of a capacitor short circuit.

In an embodiment, the converter modules of a converter arm are connected in series between the respective terminal of the DC link and the AC output. For example, each converter module may comprise two terminals and at least two semi conductor switches and a capacitor. By means of these two terminals, the converter modules can be connected in series. One semiconductor switch of the converter module can be connected between the two terminals, and the other semiconductor switch can be connected in series with the capacitor between the two terminals.

Each converter arm may comprise an inductance connected in series with the plural converter modules. By means of these inductors, the short circuit current at the output of the MMC may be decreased or limited. This may decrease the chance that the pipeline section which is to be heated is damaged in case of a short circuit. The inductor can limit the current flowing internally in the converter.

The DEH system may further comprise a capacitor connected to the power output of the power supply in series with the pipeline section or in parallel with the pipeline section to be heated. By means of such capacitor, a compensation for reactive power may be achieved. If the capacitor is connected in series with the pipeline section, then the converter may be configured to provide a lower voltage output and a higher current output compared to a configuration in which the capacitor is connected parallel to the pipeline section. The capacitor may be provided by a capacitor bank.

If the capacitor is connected in parallel with the pipeline section, the direct electric heating system may further comprise an output choke connected to the power output of the power supply. The current (in particular the inrush current) in the capacitor can thus be limit when switching the DEH-System.

In an embodiment, each converter arm may comprise a bypass switch for each converter module. The bypass switch can be configured to enable a bypassing of the respective converter module when the bypass switch is closed. For this purpose, the bypass switch may be connected in parallel with the respective converter module. The bypass switch may for example be a mechanical switch, in particular it may be a bypass contactor or bypass copper bars. In such configuration, converter modules may be put out of service, e.g. for replacement, while the DEH system remains operable and can continue to provide electric power to the load, i.e. to the pipeline section.

In an embodiment, the modular multilevel converter comprises exactly one converter leg providing a first AC output and a second AC output being connected to a midpoint of the DC-link. A relatively simple configuration of the converter can thus be achieved. In another embodiment, the modular multilevel converter comprises exactly two converter legs, each converter leg providing an AC output. The AC output can for example be connected between two converter arms of each converter leg. This way, a configuration may be achieved in which the current through each converter leg can be kept relatively low compared to a single leg solution.

The pipeline section may be a section of a subsea pipeline.

A further embodiment according to the invention provides a method of operating a direct electrical heating system for heating a section of a pipeline. The method comprises the steps of receiving electric power at a power input of a power supply, converting, by means of a modular multilevel converter, received electric power to single phase AC electric power, and supplying the single phase AC electric power to the pipeline section for heating the pipeline section. With such method, advantages similar to the ones outlined further above with respect of the DEH system may be achieved.

In an embodiment, the direct electrical heating system employed in the method may be configured in accordance with any of the above outlined embodiments.

The features mentioned above and those yet to be explained below can not only be used in the combinations indicated, but also in other combinations or in isolation without leaving the scope of the invention. In particular, these features may be combined with each other unless noted to the contrary.

### Brief description of the drawings

The forgoing and other features and advantages of the invention will become further apparent from the following detailed description read in conjunction with the accompanying drawings. In the drawings, like reference numerals refer to like elements.
- Figure 1: is a schematic block diagram illustrating a DEH system according to an embodiment of the invention.
- Figure 2: is a schematic block diagram illustrating a DEH system according to a further embodiment of the invention.
- Figure 3: is a schematic diagram illustrating the configuration of a converter in more detail which may be employed in embodiments of the invention.
- Figure 4: is a schematic diagram illustrating the configuration of a converter module of a converter which may be employed with embodiments of the invention.

### Detailed description

In the following, embodiments of the invention will be described in detail with reference to the accompanying drawings. It is to be understood that the following description of embodiments is given only for the purpose of illustration and it is not to be taken in a limiting sense.

It should be noted that the drawings are to be regarded as being schematic representations only, and elements in the drawings are not necessarily to scale with each other. Also, the coupling of physical or functional units as shown in the drawings and described hereinafter does not necessarily need to be a direct connection or coupling, it may also be an indirect connection or coupling, i.e. connection or coupling with one or more additional intervening elements. A skilled person will further appreciate that the physical or functional unites illustrated and described herein with respect to the different embodiments do not necessarily need to be implemented as physically separate units. One or more physical or functional blocks or units may be implanted in a common circuit, circuit element or unit, while other physical or functional blocks or units shown and described may be implemented in separate circuits, circuit elements or units.

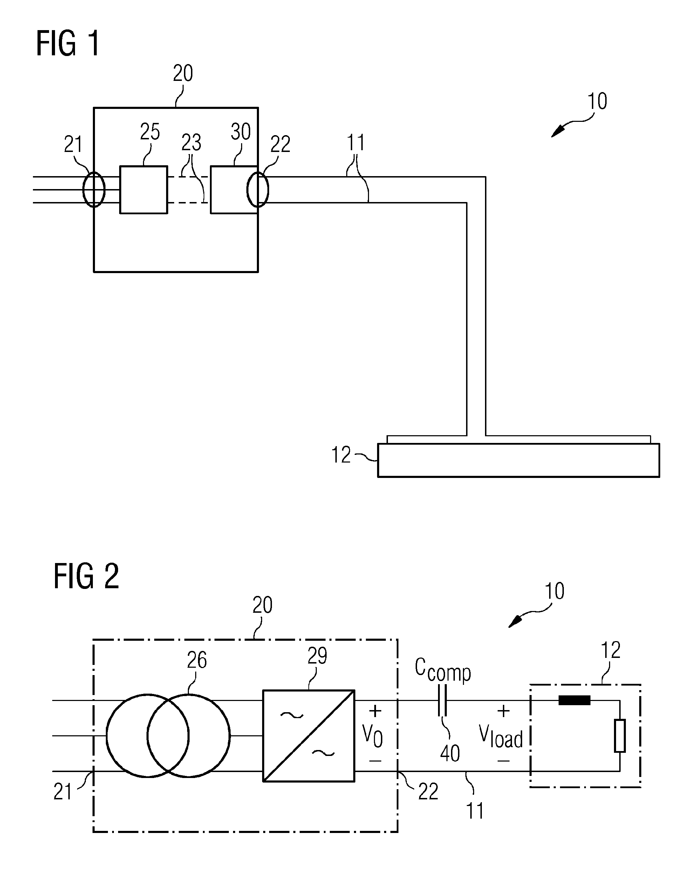

Figure 1 schematically illustrates a direct electrical heating system 10 according to an embodiment of the invention which comprises a power supply 20 and electric connections 11 which connect the power supply 20 to the pipeline section 12, which can be a section of a subsea pipeline. Electric connections 11 may for example comprise a subsea cable.

In the embodiment of figure 1, the power supply 20 comprises a power input 21 at which it receives electric power, e.g. from a power grid, a transformer, a generator or the like. It further comprises a power output 22 at which it outputs single phase AC electric power, which is supplied to the pipeline section 12.

Power supply 20 has an internal DC link 23 at which DC electric power is provided. Several possibilities exist for providing DC electric power to DC link 23. In the example of figure 1, a rectifier 25 is provided which receives via power input 21 three-phase AC electric power. In other configurations, the DC link 23 may for example be supplied with DC electric power via the power input 21, for example by connecting power input 21 to a DC bus (not shown). If such DC bus is provided, plural power supplies 20 can be connected to the DC bus, for example for providing electric power to plural pipeline sections 12. Power input 21 can accordingly be configured to receive AC electric power, in particular three-phase AC electric power, or DC electric power. In the latter case, the power supply would not comprise a rectifier 25.

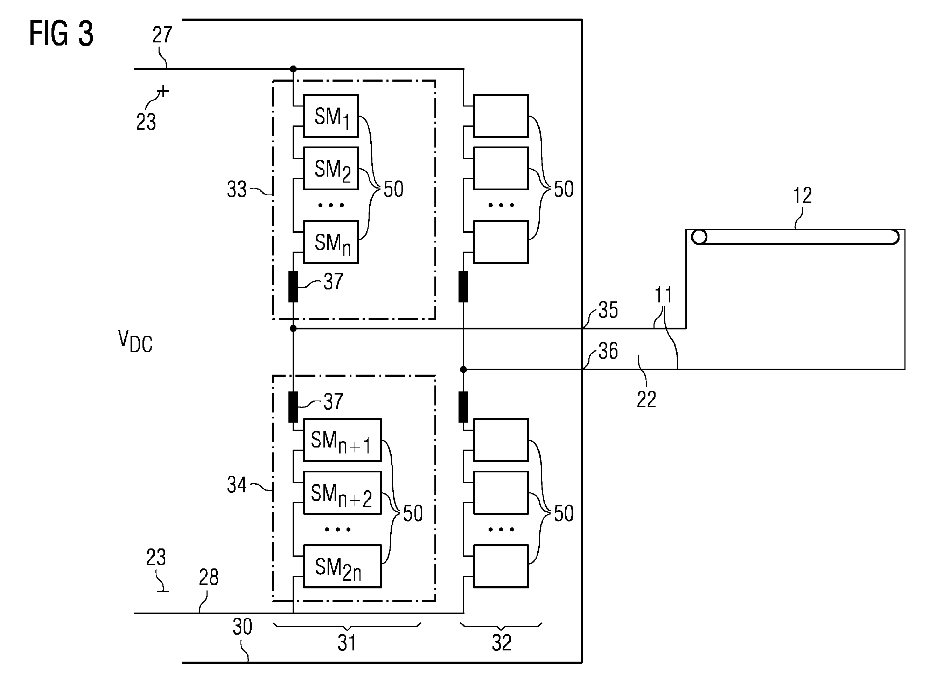

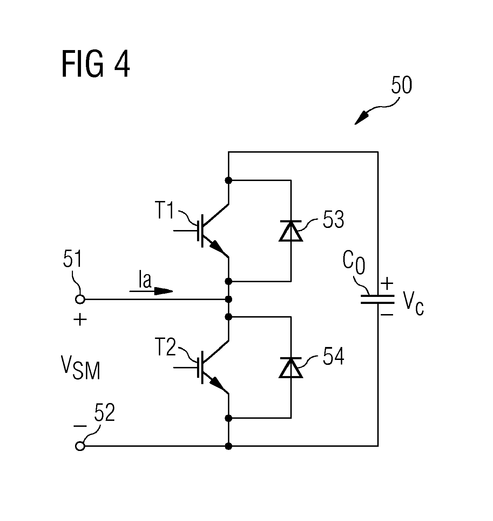

Power supply 20 further comprises an inverter for converting the DC electric power on DC link 23 to a single-phase AC electric power, which is supplied via the power output 22 to pipeline section 12. The inverter is provided by a modular multilevel converter (MMC) 30. The modular multilevel converter 30 is herein also abbreviated as "converter". Embodiments of the converter 30 which may be used with the DEH system 10 of figures 1 and 2 are described further below with respect to figures 3 and 4.

Figure 2 illustrates a further embodiment of the DEH system 10, which corresponds to the embodiment of figure 1 and comprises further components. Accordingly, the explanations given above with respect to figure 1 are equally applicable.

In figure 2, the rectifier 25, the DC link 23 and the modular multilevel converter 30 are shown as a single converter unit 29.

Power supply 20 further comprises a transformer 26, which may provide electric power received on the power input 21 from e.g. a power grid or a generator at the appropriate voltage level to the converter unit 29. By means of converter unit 29 it becomes possible to adjust the output voltage provided at power output 22 to a desired level. No output transformer is required. Accordingly, the transformer 26 connected the input side of the converter unit 29 can be kept relatively simple. Transformer 26 can be a conventional three-phase AC to AC transformer.

The DEH load in form of the pipeline section 12 is a load with a relatively high inductance. To compensate for this inductance and to achieve a power factor of the system that is relatively closed to one, a compensation unit is connected either in series or parallel to the load constituted by pipeline section 12. The compensation unit comprises a compensation capacitor 40 (C_{COMP}), which in the example of figure 2 is connected in series with the load 12. With the capacitor placed in series as illustrated in figure 2, the output voltage of the converter unit 29 can be adjusted to be comparatively lower and the output current can be adjusted to be comparatively higher than for a situation in which the capacitor 40 is connected in parallel to the load 12. If the capacitor 40 is connected in parallel to load 12, a small output choke (not shown) may furthermore be connected to the output of the converter unit 27 for limiting the current in the capacitor 40 when switching, e.g. limiting the inrush current when switching on the DEH system 10. The choke may for example comprise an inductance connected directly to the first or second AC output 35, 36, so that it is in series with both, the load and the capacitor 40.

Capacitor 40 may be provided by a capacitor bank. Note that even though figure 2 illustrates the capacitor 40 separate from the power supply 20 and the converter unit 29, the capacitor 40 may in other embodiments be comprised within the power supply 20 or the converter unit 29. The same applies to the output choke (not shown).

By using a modular multilevel converter (MMC) 30 as the inverter as illustrated in the embodiments of figures 1 and 2, it becomes possible to scale the converter due to its modularity, so that a given power demand can be met within a wide range. As an example, for heating a pipeline section of increased lengths, a higher voltage will be required in order to generate the current in the pipeline section which is necessary to heat the pipeline section to a sufficient degree. The number of converter modules of the MMC can accordingly be increased in order to achieve the required voltage. Similarly for lower power or voltage demand, the number of converter modules can be decreased.

Figure 3 is a schematic diagram showing an embodiment of the converter 30 which can be implemented in the DEH system 10 of figures 1 and 2. Conventional MMC's are three-phase converters. In the embodiment of figure 3, the converter 30 is a single phase MMC. It comprises a first converter leg 31 and a second converter leg 32, the converter legs being connected in parallel between the first terminal 27 and the second terminal 28 of the DC link 23. The voltage V_{DC} is provided on the DC link between the terminals 27 and 28. Each converter leg 31, 32 has a first (or upper) converter arm 33 and a second (or lower) converter arm 34. In the embodiment of figure 3, each converter arm 33, 34 comprises plural converter modules 50 connected in series, and an inductance 37 connected in series with the modules 50. In particular, the modules 50 of the first and second converter arms 33, 34 and the inductance 37 are all connected in series between the first and second DC terminals 27 and 28. The second converter leg 32 is configured correspondingly. A first AC output 35 (may also be termed AC terminal) is connected between the first converter arm 33 and the second converter arm 34 of the first leg 31. The second AC output 36 is connected correspondingly between the converter arms of the second converter leg 32.

Each converter leg has in each of its two converter arms the same number of converter modules 50. The sum of the voltages in the two arms 33, 34 of a converter leg will generally be equal to the DC voltage V_{DC} supplied at the DC terminals 27 and 28. By the series connection of the converter modules 50 and by controlling the output voltages of the converter modules 50 individually, it is possible to obtain an overall output voltage at the respective AC output 35, 36 that can be adjusted in steps.

A possible configuration of a converter module 50 is illustrated in more detail in figure 4. Each converter module 50 has two terminals 51, 52 (may be termed first and second converter module terminals), by means of which the converter module is connected in series with the other converter modules 50 of the same converter leg. Converter module 50 further includes two semiconductor switches T1 and T2, which may for example be IGBT switches (insulated gate bipolar transistor). The converter module 50 further includes a capacitor unit, here the capacitor C₀. The diodes 53 and 54 ar connected across the semiconductor switches T1 and T2, respectively. The converter module 50 acts as a voltage source, wherein the voltage V_{SM} between the terminals 51, 52 can be controlled in a range between zero volt and V_{C}, depending on the switching state of T1 and T2 and the charging state of the capacitor Co.

The following table shows an overview of the voltage and the charge/discharge of the capacitor which corresponds to the different possible states of the converter module 50. T1 and T2 indicate the switching state of the two semiconductor switches T1 and T2, whereas V_{SM} indicates the output voltage of the converter module 50, Iₐ indicates the current through the converter module 50 and dV_{c}/dt indicates the change of the capacitor voltage with time.

| T1 | T2 | V_{SM} | Iₐ | dV_{c}/dt |
|---|---|---|---|---|
| On | Off | Vc | >0 | >0 |
| On | Off | Vc | <0 | <0 |
| Off | On | 0 | >0 | 0 |
| Off | On | 0 | <0 | 0 |

As can be seen, by controlling the semiconductor switches of the converter modules connected in series in each converter leg, it is possible to achieve a modulated output voltage at the AC output 35, 36. More details of the operation of converter modules in a modular multilevel converter can be taken from the document *"*An innovative Modular Multilevel Converter Topology Suitable for a Wide Power Range", by A. Lesnicar and R. Marquardt, IEEE Bologna PowerTechConference, 2003", which is incorporated herein by reference in its entirety.

Turning back to figure 3, as mentioned above, the converter 30 is configured to be a single phase AC inverter. Besides the configuration shown in figure 3 using two converter legs 31, 32, it is also possible to use only a single converter leg. Generally the converter modules 50 may only be able to produce a positive voltage in addition to a zero voltage level, they may not be able to reverse the voltage polarity at the output. The configuration of the converter 30 with only a single leg may thus require the connection of one AC output to a DC link midpoint, and an operation at a twice as high DC voltage compared to an operation with two legs, in which the voltage supplied to the load is the difference between the two output voltages of the AC outputs 35, 36. Accordingly in the two leg configuration, one AC output may be set to V_{DC}, where is the other can be set to zero volt, where is a single leg configuration, one of the AC outputs would always have the voltage of the DC link midpoint. In consequence, requiring a twice as high DC voltage on the DC link would also require the series connection of twice as many modules compared to the two leg solution, so that the amount of components and switching levels would be similar for both solutions. The one leg solution is an alternative to the two leg solution illustrated in figure 3.

In the example of figure 3, each converter 33, 34 comprises n converter modules 50. It should be clear that the number n of converter modules 50 can be chosen in accordance with the respective application, it can in particular be adapted to meet a certain voltage requirement.

Furthermore, it is possible to provide a bypass switch (not shown) for each converter module 50. This may for example be a mechanical switch, a bypass contactor or bypass copper bar. The bypass switch may be connected between the first and the second terminals of the respective converter module 50, so that when the bypass switch is closed, the converter module 50 is effectively taken out of the series connection of the remaining converter modules 50 in the converter arms 33, 34. Accordingly, in the event of a fault in a converter module 50, the respective converter module can be taken out by means of the bypass switch, and the remaining n-1 modules can continue to operate. In such configuration, it is possible to put selected converter modules out of service, while the DEH system 10 remains operable and can continue to provide power to the load, i.e. to heat the pipeline section 12. Faulty converter modules 50 can thus be exchanged during operation.

Returning now to figure 1, there is shown a configuration using a rectifier 25 for providing the DC voltage on the DC link 23. For the purpose of direct electrical heating, reversible power flow is generally not required. The DC voltage on the DC link 23 may thus be obtained from a conventional rectifier solution, which rectifier can be configures to enable DC link voltage control and to have a low impact on the system supplying electric power via power input 21. As mentioned above, several converters 30 may be operated from a common DC bus, for example for feeding multiple DEH loads. In other embodiments, the DEH system may be combined with one or more motor drives, which are connected to the same DC bus.

In an embodiment of the DEH system 10, the DC link 23 does not have a central capacitor. This means that no capacitor is directly connected between the DC terminals 27 and 28, or no series connection of capacitors is directly connected between the DC terminals 27 and 28. Such configuration becomes possible since capacitors are distributed in the individual converter modules 50. Such configuration may reduce the risk of component damage in the event of a capacitor short circuit which may occur in conventional converters on a DC link capacitor.

Furthermore, the DEH system 10 employing the MMC 30 has a lower short circuit current at its power output 22 compared to conventional DEH systems. This can be achieved by means of the inductors 37, which limit the current flow internally in the converter 30. By means of inductors 37, a reduced short circuit can be achieved.

A further advantage is that due to the topology of the converter 30, the converter output current can be shared between the first and second converter arms 33, 34. This may reduce the stress on the semiconductors switches in the converter. It furthermore may make it possible to deliver higher currents than topologies where the full load current flows through each switch. Furthermore, a wide voltage range can be obtained by means of the converter 30, which makes it in particular suitable for the DEH system. Also, the converter 30 is operable with different compensation strategies, as described above.

The use of high voltage power electronics in the converter 30 thus makes it possible to eliminate several of the drawbacks of conventional DEH systems. In particular, the DEH system 10 does not require a complex fine tuning of compensation circuits, it has a reduced short circuit level at its single phase AC power output, no complex transformer is required to adjust the output voltage for changing the heating power. Furthermore, the converter 30 allows an adjustment of the frequency of the AC power provided to the pipeline section 12. Accordingly, the frequency of the electric power supplied to the pipeline section 12 may be adjusted in accordance with the pipeline impedance, e.g. for minimizing reactive power and other frequency dependent effects. Also, due to the intermediate DC link 23, the power supply 20 can be a symmetrical load on a three-phase power source, e.g. on the power grid or a generator.

While specific embodiments of the invention are disclosed herein, various changes and modification can be made without departing from the scope of the invention. The present embodiments are to be considered in all respect as illustrative and non-restrictive, and all changes coming within the meaning and equivalency range of the appended claims are intended to be embraced therein.

## Claims

1. A direct electrical heating system for heating a section of a pipeline, comprising
- a power supply (20) with a power input (21) for receiving electric power and a power output (22) for supplying AC electric power to the pipeline section (12), the power supply (20) comprising a DC link (23) at which DC electric power is provided and an inverter connected to the DC link (23) for converting the DC electric power to a single phase AC electric power for direct electrical heating of the pipeline section (12), and
- electric connections (11) from the power output (22) of the power supply (20) to the pipeline section (12), **characterized in that**
the inverter is a modular multilevel converter (30) configured to convert the DC electric power to a single phase AC electric power, the modular multilevel converter (30) comprising at least one converter leg (31) having a first and a second converter arm (33, 34) connected in series between a first and a second terminal (27, 28) of the DC link (23), and an AC output (35) connected between the first and second converter arms (33, 34), the AC output (35) of the modular multilevel converter (30) being electrically coupled to the power output (22) of the power supply (20),
wherein each converter arm (33, 34) comprises plural converter modules (50) connected in series and configured to produce an AC electric power at the AC output (35) of the converter from the DC electric power supplied on the DC link (23).

2. The direct electrical heating system according to claim 1, wherein the power supply (20) further comprises a rectifier (25), in particular a three phase rectifier, the rectifier (25) being configured to receive AC electric power via the power input (21) of the power supply (20) and to output DC electric power to the DC link (23).

3. The direct electrical heating system according to claim 2, wherein the power supply (20) further comprises an AC/AC transformer (26) connected between the power input (21) of the power supply and the rectifier (25).

4. The direct electrical heating system according to claim 1, wherein the power supply (20) is configured to receive DC power at its power input, the power input (21) being connected to a DC bus.

5. The direct electrical heating system according to any of the preceding claims, wherein the DC-link (23) is a capacitor-less DC link.

6. The direct electrical heating system according to any of the preceding claims, wherein the converter modules (50) of a converter arm (33, 34) are connected in series between the respective terminal of the DC link (27, 28) and the AC output (35).

7. The direct electrical heating system according to any of the preceding claims, wherein each converter module (50) comprises two terminals (51, 52) and at least two semiconductor switches (T1, T2) and a capacitor (C₀), one semiconductor switch (T2) being connected between the two terminals (51, 52), the other semiconductor switch (T1) being connected in series with the capacitor (C₀) between the two terminals (51, 52).

8. The direct electrical heating system according to any of the preceding claims, wherein each converter arm (33, 34) comprises an inductance (37) connected in series with the plural converter cells (50).

9. The direct electrical heating system according to any of the preceding claims, further comprising a capacitor (40) connected to the power output (22) of the power supply in series with the pipeline section (12) or in parallel to the pipeline section (12).

10. The direct electrical heating system according to claim 9, wherein the capacitor (40) is connected in parallel with the pipeline section (12), the direct electric heating system (10) further comprising an output choke connected to the power output (22) of the power supply (20).

11. The direct electrical heating system according to any of the preceding claims, wherein each converter arm (33, 34) comprises a bypass switch, in particular a bypass contactor, for each converter module (50), the bypass switch being configured to enable a bypassing of the respective converter module (50) when the bypass switch is closed.

12. The direct electrical heating system according to any of the preceding claims, wherein the modular multilevel converter comprises exactly one converter leg providing a first AC output and a second AC output being connected to a midpoint of the DC-link (23), or exactly two converter legs each providing an AC output.

13. The direct electrical heating system according to any of the preceding claims, wherein the pipeline section (12) is a section of a subsea pipeline.

14. A method of operating a direct electrical heating system (10) for heating a section of a pipeline (12), comprising the steps of
- receiving electric power at a power input (21) of a power supply (20),
- converting, by means of a modular multilevel converter (30), received electric power to single phase AC electric power, and
- supplying the single phase AC electric power to the pipeline section (12) for heating the pipeline section (12).

15. The method according to claim 14, wherein the direct electrical heating system (10) is configured according to any of claims 1-13.
